Europäisches Patentamt

European Patent Office

Office européen des brevets

(19)

(11) Publication number: 0 079 230
A2

(12) # EUROPEAN PATENT APPLICATION

(21) Application number: 82305937.3

(22) Date of filing: 08.11.82

(51) Int. Cl.³: **G 11 B 7/24**

(30) Priority: 09.11.81 US 319407

(43) Date of publication of application:
18.05.83 Bulletin 83/20

(84) Designated Contracting States:
BE DE FR GB IT NL SE

(71) Applicant: BURROUGHS CORPORATION
Burroughs Place
Detroit, Michigan 48232(US)

(72) Inventor: Lee, Neville
3472 Avenue Ladera
Thousand Oaks California 91362(US)

(72) Inventor: Labudde, Edward V.
3401 Daniel Street
Newbury Park California 91320(US)

(72) Inventor: Chao, Shiuh
14010 Cerise Avenue
Hawthorne California 90250(US)

(72) Inventor: Labudde, Robert A.
821 Haileah Drive
Virginia Beach Virginia 23404(US)

(74) Representative: Kirby, Harold Douglas Benson et al,
G.F. Redfern & Company Marlborough Lodge 14
Farncombe Road
Worthing West Sussex BN11 2BT(GB)

(54) Preparation of archival recording media for digital data storage.

(57) Embodiments show a recording medium adapted for recording and read-out with relatively low-power laser means to write digital data "bits" (as reflectance changes) for high density computer storage. One preferred medium comprises a disk support having an "anti-reflective" surface on which is laid a gold "information layer" adapted to absorb recording radiation (from laser beam) and so "write" the bits.

The anti-reflective surface may comprise a high-reflectance surface, like an aluminum film, covered with a transparent (to beam) dielectric "spacer" like $SiO_2$.

The gold (absorber) layer exhibits surprisingly high sensitivity, apt for low power recording, and extended archival stability; more surprising, it appears to be formed without any evidence of the usual "pit formation" or other deformation and by relatively slight laser-heating, well below the melting point!

-1-

## PREPARATION OF ARCHIVAL RECORDING MEDIA FOR DIGITAL DATA STORAGE

### CROSS REFERENCE TO RELATED PATENT APPLICATIONS

This patent application contains subject matter relating to our commonly-assigned concurrently-filed copending patent applications, Serial Nos. 319,463, 319,464, 319,465, 319,466 and 319,406.

The present invention relates to a novel high density archival information storage medium, and more particularly to such a medium adapted for recording with low-power laser means.

### INTRODUCTION, BACKGROUND

Optical storage of digital data is a relatively new technology, concerned with the storage and retrieval of digital information using optical techniques, using a special related (ODD, "optical digital data") medium, such as an ODD disk. By analogy such data is conventionally stored on magnetic media like tapes or disks commonly used with high speed digital computers today.

This disclosure relates to analogous optical media and associated read/write techniques and apparatus which are adapted to record and read-back the digital information using a focused beam of prescribed radiation energy, especially with low power laser equipment.

As workers well know, success in designing and operating such a system depends greatly on the storage medium. Workers in the art have, for some time now, pondered how to develop a satisfactory ODD disk medium, especially one adapted for low power lasers presently available and most practical. This invention teaches a practical ODD disk for this purpose, one adapted for reasonably long stable archival-life (e.g., on the order of 10 or more years) and use for record storage in high speed computer systems of today.

--Laser recording media, generally:

Now, requirements for such ODD media are stringent; e.g., involving high bit density and cost-effective information storage at satisfactory write/read rates; especially using low-powered lasers. (Workers recognize the simplicity and power of such laser implementation, where one need only modulate and deflect a laser beam for read/write operations). In related applications (e.g., video disk recording) workers have used lasers and, for certain aspects thereof, have suggested media using a metal film as an "information layer", this layer being softened, melted or vaporized (e.g., thermally-ablated) by a write-laser beam sufficient to form a "void" (a pit, hole, bubble, etc., or other deformation) in the layer as the "bit". Such a film may be coated on the surface of a rotating disk.

Many workers have felt that such laser recording is promising for computer records of various kinds; e.g., the mentioned ODD media. They have predicted that practical

- 3 -

systems await media responsive to low-power laser writing and that this in turn depends whether one can find such an information layer (material) able to be melted (or vaporized, etc.) at current practical low-power levels. This may also depend on the radiation efficiency of the associated system and on the thermal regime surrounding the layer (e.g., see Bartolini article cited elsewhere).

Thus, workers have looked for such laser recording materials which exhibit high thermal efficiency (a measure of how much of the heat generated at the recording site remains sufficiently localized to allow "pit" formation), and have long sought-out recording materials with a low melting point and low thermal diffusivity (tellurium, lead, bismuth and indium are examples).

And, since workers prefer to use low-power lasers for such recording (e.g., to enhance the operating life of a laser and minimize its cost and size), it has seemed even more desirable that the metal chosen for such an information (absorber) film have an "outstandingly-low" melting point ("adequately-high sensitivity") so that the desired "void" may be formed with minimal laser power.

--Te Absorber films:

Now, some workers have contemplated using Tellurium (Te) absorber films for this, or related, laser-recording for several reasons. Tellurium has an attractively-low melting point (about 450°C), conducts heat poorly and appears able to provide good sensitivity and S/N ratio; also, it is relatively convenient to deposit as a thin film. Bismuth is also commonly suggested for like reasons. And related alloys (e.g., as Te-Ge, Te-As-Se and Bi-Se) have been suggested as of interest.

Tellurium has a low write-threshold (energy) -- when compared with Aluminum, for instance, as well as having a much lower thermal diffusivity -- e.g., see U.S. 4,222,071 to Bell, et al; also see "Review of Optical Storage Media" by Zech, SPIE Vol. 177, Optical Information Storage, 1979, page 56 et sequ.; and also see "Optical Recording Media Review" by Bartolini, page 2 et sequ. of SPIE Vol. 123, "Optical Storage Materials and Methods", 1977).

For instance, this Bartolini article discusses such absorber films ("Ablative Thin Films") along with ten other optical recording means -- including "Photo-polymers", that is organic compounds known to undergo photochemical changes which involve a shift in refractive index. The Zech article discusses absorber films arranged and used so that laser-writing forms a "hole" in the absorbing layer, this information being detected according to difference in reflectivity (similarly for Bell patent).

For such known "deformational recording", it appears that the thermal energy delivered by a high intensity radiation beam ("Write-Beam" of a Laser) is such that the "write-site" will soften, melt or ablate, in at least part of the beam cross-section. It is believed that surface tension then causes a "transverse cavitation" (see article by Zech cited above), leading in turn to the formation of a "pit" or hole, usually slightly elliptical. (See "Melting Holes in Metal Films for Real-Time, High Density Data Storage" by Cochran and Ferrier, SPIE Proceedings, August 1977, pages 17-31).

--absorber films:

As one feature hereof, we have discovered a related kind of laser-recording can be done at temperatures well-below the melting point of such an "absorber". And, as a result we have also discovered that materials like gold, having a relatively high melting point and rather good conductivity -- characteristics heretofore shunned by workers for the instant purposes -- can yield a surprisingly good absorber film; one comparable in sensitivity to a "hitherto-preferred" absorber like Tellurium.

Of course, some have vaguely speculated that "high melting point" materials like Titanium and Gold (also platinum, rhodium, nickel, chromium, manganese and vanadium -- e.g., cf. U.S. 4,285,056 to Bell) might be suitable for such "deformation" absorber layers. However, such speculations have paid no heed to the practical problem of "sensitivity" or to how a lower power laser can record on them as mentioned above. Or they have ignored the associated problem of high conductivity (where heat is readily conducted away from the recording site it is wasted, further degrading sensitivity -- note a metal like gold has a high conductivity, whereas Ti and Te do not).

More astute observers have acknowledged that such "high-melting-point" metals are quite unlikely as absorber candidates (e.g., as expressed in cited U.S. 4,222,071 where the "low-melting-point" and poor conductivity of Te was heartily endorsed as yielding superior sensitivity and enabling one to record with a low-power laser. Thus, metals such as Au which are the REVERSE; i.e., good heat conductors and high melting point should, in theory, be the worst "absorbers"). Yet, the present invention teaches that just such metals as gold can be used and be superior to known absorbers -- e.g., having a sensitivity somewhat equivalent to Te and much superior archival life.

This invention, further, teaches that such absorber films -- contrary to everything taught in the art -- evidently need form no holes or be otherwise deformed in the course of recording.

--Extended archival life:

A major advantage of optical data storage technology is the increased storage capacity it affords; e.g., the order of 100 X that of magnetic tape. An optical data disk as here contemplated will be assumed as "non-erasable", with information stored permanently thereon for an extended archival life on the order of 10-15 years or more. Such extended life is a goal yet to be reached in the art, though workers would dearly love to do so. The present invention promises media exhibiting this archival life, being especially adapted for optical mass memory and like applications.

By contrast, commonly-suggested absorber metals like Bismuth and Tellurium are known to slowly oxidize and otherwise degrade much too readily in the typical user environment; hence, they are poor candidates for such archival records (e.g., see cited article by Ash et al. 1981; and Zech article; also demonstrated by Example I below). Workers generally realize that Tellurium has particularly poor archival stability -- i.e., its read-out quickly degrades with time. This degradation is accelerated in a high humidity environment; and is typically characterized by a rapid increase in overall optical transmission, presumably caused by a general oxidation of the metal, as well as by severe attack on selected bit sites, beginning at "defect sites" in the metal film. And Bismuth is similar.

This archival feature is addressed by this invention which teaches the analogous use of related films of gold, etc. -- materials which are quite archival and are stable for extended use as computer information storage media, especially as for such optical data disk records for (as in Table I) computers.

Thus, as a feature of novel application, we contemplate the use of such materials for records exhibiting the desired archival life, i.e., being extremely resistant to oxidation or like environmental degradation, during the contemplated use. Thus, no "loss" of recorded information will occur over extended (storage) life -- i.e., reflectivity remains stable enough to "read". No practical storage medium or associated system is yet available which can provide extended archival life; especially where high sensitivity is also required (e.g., the sensitivity of Te or better). The invention teaches just this step forward.

The novel recording media taught herein will be generally assumed as meeting the foregoing criteria; and, where possible, as also meeting one or more of the "Target performance criteria" presented in Table I below. (See also "Optical Properties of Tellurium Films Used for Data Recording" by Ash and Allen, SPIE, Vol. 222, 1980).

## TABLE I (Target Media Criteria)

1.  "High" Sensitivity:
    -- allow recording with low-power laser means. "Sensitivity" will be understood as minimum laser power needed for bit formation (change in spot reflectivity, akin to that resulting from formation of a hole, or other void or like change in medium, giving adequate read-out at contemplated recording rate).
    With the invention, one may typically "write" with the order of 5-15 mW laser power for approximately 40-60 n.sec;
    -- yet not degraded by read-out (e.g., on repeated playback).

1-A. High S/N: (adequate read-out)
    Signal to noise ratio (for adequate read-out) on the order of about 30-40 dB or more.

2.  "Archival Stability": (10 + years life):
    Able to be used or stored in "normal computer environment" without dropping below min. read-out for at least 10-15 years.

3.  "Computer records":
    Assume capability to operate with present day high speed digital computers -- e.g., with at least the same capabilities as today's magnetic disk storage equipment (e.g., bit density of about $10^6$ bits/cm$^2$ or better).

4.  "Deposit-able" -- suitable film(s) can be deposited on "commercial scale" and give repeatable, controlled characteristics.

5.  Overcoat-ability:  absorber film (e.g., up to a few mils thick) can be coated to mechanically protect it and defocus "surface dirt" without sacrificing above features, e.g., still give adequate read-out (preferably overcoat can also impede heat and contaminant-gases, etc. from absorber film).

Thus, it is an object hereof to provide the foregoing, and other related, features and advantages. A more particular object is to do so teaching gold as such absorber (information) films. Another object is to teach such films exhibiting good sensitivity, even with low-power lasers; as well as extended archival life. A further object is to teach formation of such records apt for recording without apparent need to generate "pits" or like voids in the information layer. Another related object is to do so without need to melt or significantly soften the information layer; i.e., developing "altered reflectivity" bits (pseudo-holes") while keeping the layer well below its melting point.

BRIEF DESCRIPTION OF THE DRAWINGS

These and other features and advantages of the present invention will be appreciated by workers as they become better understood by reference to the following detailed description of the present preferred embodiments, these being considered in conjunction with the accompanying drawings, wherein like reference symbols denote like elements:

FIG. 1 provides a cross-sectional view of an idealized portion of a prior art recording medium;

FIG. 2 provides a similar view of a novel preferred recording medium embodiment exhibiting a construction in accordance with principles of the present invention;

FIG. 4 is a similar view of a preferred disk record embodiment; and

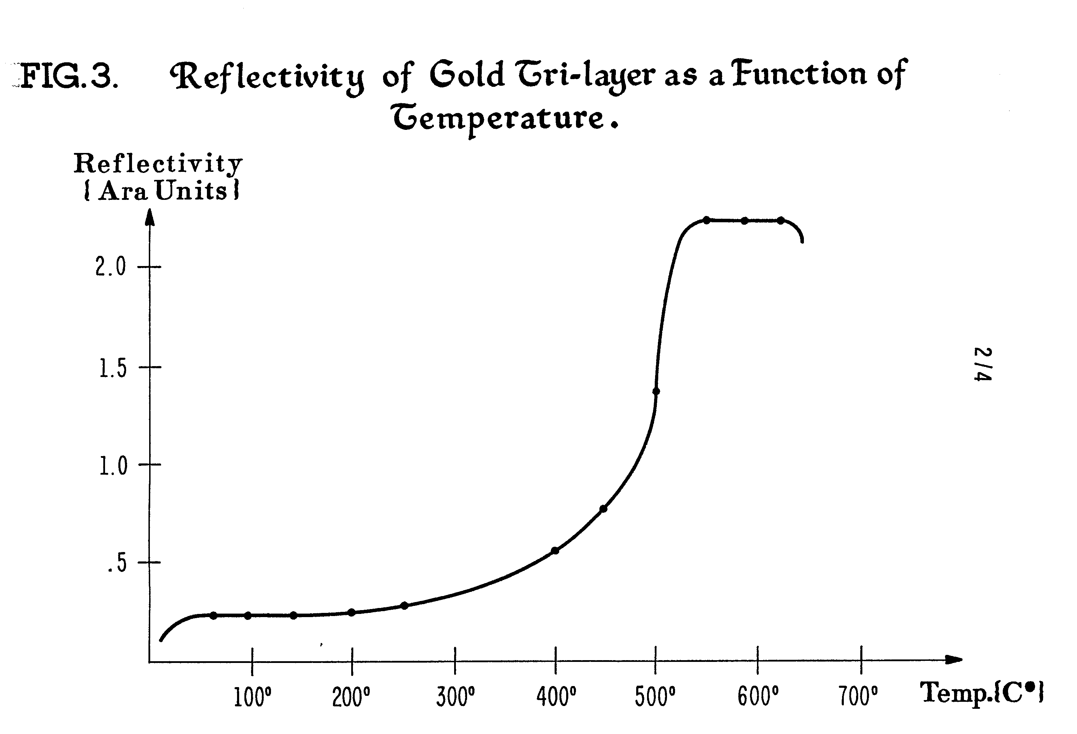

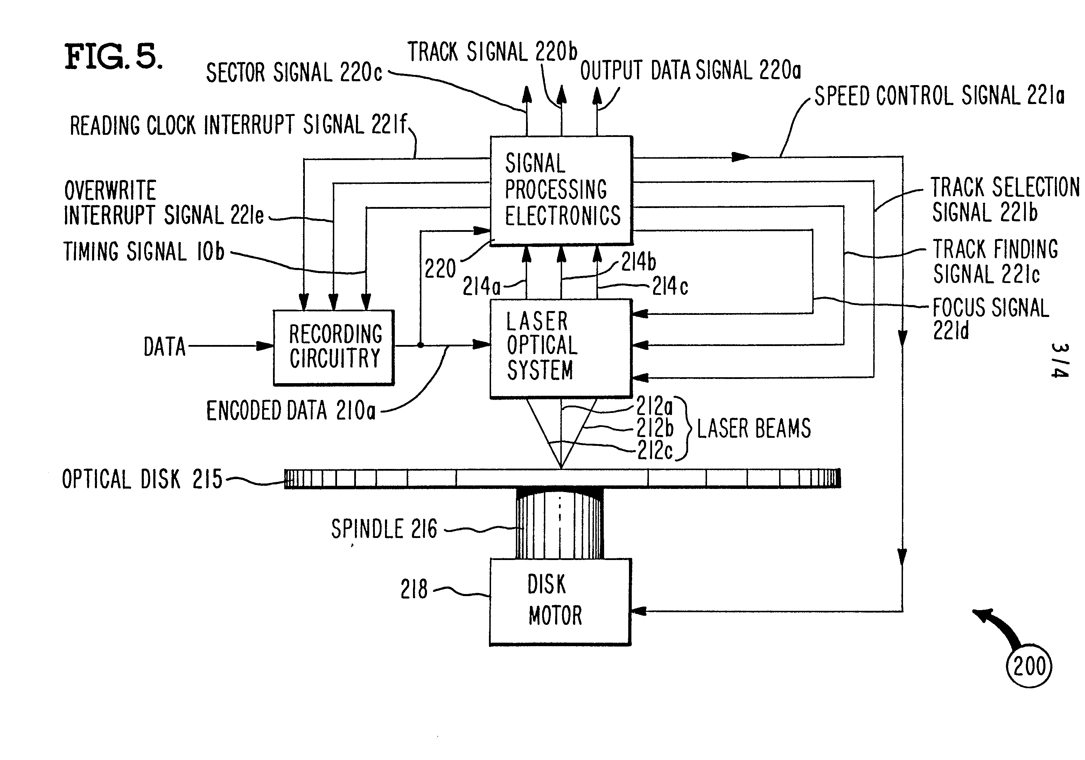

FIG. 3 is a plot of absorber reflectivity vs. gross temperature; and FIGS. 5-7 schematically indicate a record embodiment in a preferred application.

## DETAILED DESCRIPTION OF THE INVENTION

"Te Example"; Tellurium absorber; (prior art):

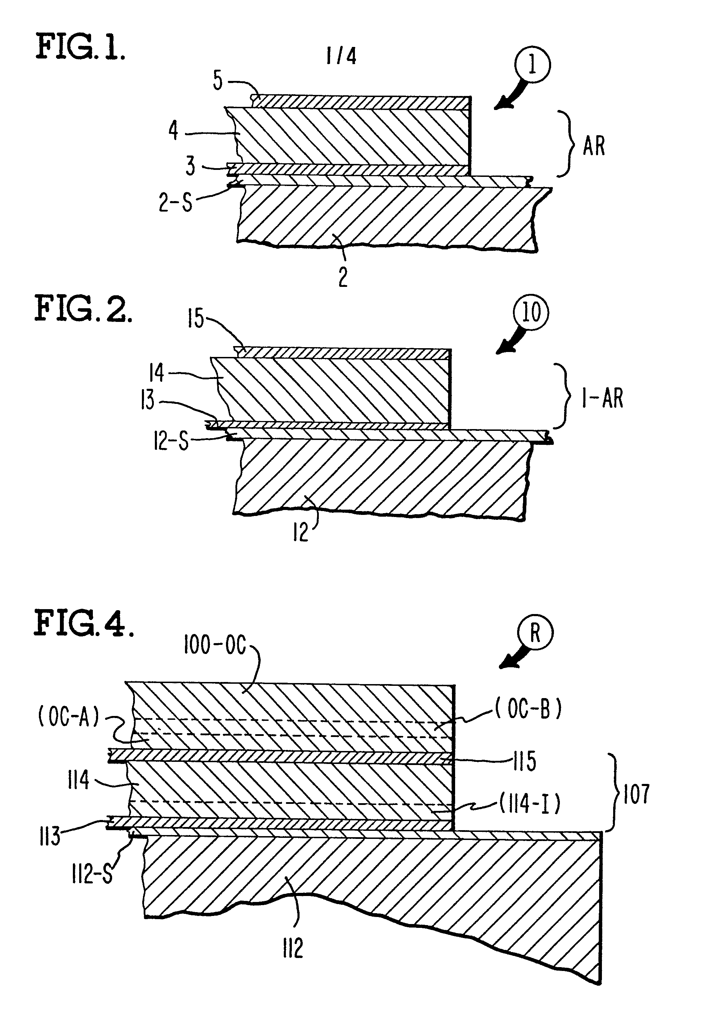

FIG. 1 is a schematic illustration of an idealized cross-sectional view of an optical recording medium 1, generally along the lines of what is presently taught in the literature for Tellurium (e.g., see Ash article). Medium 1 comprises a support 2 on which is provided an "anti-reflective" substrate AR and, on AR, an information layer ("absorber") 5.

Preferably substrate AR comprises a "reflector" layer 3, on which a transmissive "spacer" layer 4 is laid. Layers 3 and 4 may be characterized as, respectively, primarily-reflective-transmissive at the contemplated read/write wavelength. Layers 3, 4, 5 will be understood as providing a multi-layer low-reflecting (anti-reflection) design over most of the visual spectrum as known in the art (see Ash article).

Support 2 preferably comprises a polished aluminum disk of the type presently used in digital magnetic recording for computer disk drives, coated with a subbing layer 2-S adapted to render a satisfactorily-smooth, flat surface for deposition of reflector layer 3. A radiation (laser) beam of prescribed energy and wavelength may be understood as applied to medium 1 from a laser source L, so as to establish a "hole" or like "deformation" on layer 5 as "writing" takes place, e.g., at site "v" shown in phantom.

Prior art record 1 in FIG. 1 will be understood as undertaken and described principally to provide a means of comparison and distinction for the invention embodiments in the following examples. And, except as otherwise specified, all materials, methods and devices and apparatus herein will be understood as implemented by known expedients according to present good practice.

Here, the metallic recording film 5 will be understood as deposited on the "transparent" dielectric spacer 4, with both thicknesses selected to yield a known low-reflectivity structure (e.g., as in Bartolini article, where less than 3% reflectivity with 5 nm Ti on 80 nm $SiO_2$ spacer recording at =488 nm). Then, where each "pit" (bit) is recorded, this "anti-reflective" background will be disrupted such as to yield "bits" adapted for high-contrast read-back. And where the recording wavelength is shifted, the spacer thickness is readily altered to give like results.

Workers will recognize that in certain cases the reflector film may be eliminated (e.g., in favor of a "dielectric mirror") and that spacer 4 may comprise other materials/structures (e.g., several layers of like material that is also more insulative thermally).

Thus the coating parameters here will be understood as selected to preferably provide an "anti-reflective" condition for the so-coated disk at the contemplated recording frequency when the write beam is focused on this absorber layer. [Regarding such see: "Anti-Reflection Structures for Optical Recording" by Bell and Spong, Journal of Quantum Electronics, Vol. QE 14, No. 7, July 1978; and for general prior art, see exemplary articles: "Optical Disk Systems Emerged", IEEE Spectrum by Bartolini, et al, August 1978, page 20; and Optical Recording Media Review" by Bartolini, SPIE Proceedings, Vol. 123, 1977, ("Optical Storage Materials and Methods", page 2).

Preferably, deposition proceeds until the reflectance of layer 5 reaches "effective zero" or another predetermined minimum-reflectance level. As workers know, this may be done empirically, or by continually monitoring the flectance of the absorber film as 5 is deposited [and see deposition techniques described by Zech in his cited article].

Thus, one may vapor deposit an opaque layer 3 of aluminum onto lc Support 2 (all optical characteristics taken relative to contemplated R/W laser spectrum of 4000-9000 A°). Then, a layer 4 of $SiO_2$ (or like "transparent" dielectric) is vapor-deposited on layer 5 to a prescribed depth, this depth related to $\lambda_o$, the operating wavelength (-- here, preferably slightly less than either $\frac{1}{2} \lambda_o$ or $3/4 \lambda_o$). Atop layer 4 is vapor deposited the absorber film 5 to a depth which produces the initial minimum (near-zero) reflectance (see below).

The reflectivity of the record medium 1 will be understood as modified at each bit-site "v" by the radiation beam from write-laser L, so that, upon detection with a suitable means, the "void areas" v (i.e., "bits") may be distinguished as relatively "high relfectance spots" from the low reflectance "non-void" surrounding them, as known in the art.

For instance, U.S. 4,285,056 to Bell describes a like medium where information is recorded as openings in both the absorber and transmissive spacer layers, with the lengths of the openings and of the unexposed intervening areas being varied along a specific information track to convey frequency information. This patent also calls-out various materials (e.g., among them titanium, rhodium, platinum, gold, nickel, chromium, manganese and vanadium) to be deposited using standard evaporation or electron beam evaporation techniques.

However, Bell diverges from what is contemplated here in requiring that his spacer layer be heated by the write beam -- heated sufficient to either be itself ablated-away, (i.e., to otherwise develop a void within itself) or else to be decomposed or sublimed and then out-gas sufficient to cause a "bubble" under a super-layer (e.g., of gold) -- yet in the present case, essentially no energy is to be absorbed by the analogous spacer layer.

--Preparation of absorber layer 5; (FIG. 1):

Absorber layer 5 preferably comprises a relatively thin layer of Tellurium which is vapor deposited onto spacer layer 4 (on a relatively flat -- $\sim \leq 1/20$ $\lambda$ --- record-surface thereof), preferably to a depth determined by monitoring this "tri-layer coating" to yield the "initial minimum reflectance", (typically, one to several hundred A°). The Te was so evaporated in a high vacuum chamber using a refractory metal boat for a source [1.2 m box type coating chamber used *in* Ash article]. Tellurium is a "low melting point/poor conductivity" metal commonly preferred by workers because it is felt to exhibit superior sensitivity, thus minimizing required (threshold) laser write-power.

For instance, this is expressed in U.S. 4,222,071 to Bell and Bartolini, where timilar tellurium films were characterized as requiring laser-power on the order of 15+ mW for writing thereon (to achieve adequate read-out, about 20% optical efficiency being assumed -- the goal being to permit recovery of recorded video signals with about 45-50 dB S/N, or "broadcast quality" read-back).

[They also specified a solid state Ga-AL-As injection... laser, apparently applied in a continuous beam one (1) micron in diameter at the record surface, thewhile kept moving past this beam].

U.S. 4,222,071 stresses that the absorber must be a "low melting point metal" like Te (as well as being deposited in a "continuous film", and not as "microscopic agglomerates").

Substrate 2 comprises a flat, aluminum plate polished to desirable flatness and coated with subbing 2-S to accommodate deposition of thin reflector layer 3 (high reflectivity over at least the "working portion" of the contemplated radiation spectrum). About 600-900 A° of aluminum vapor deposited has been found satisfactory.

The spacer 4 is likewise deposited atop reflector 3. Spacer 4 is a dielectric material which is relatively transparent to the "working portion" of the laser spectrum and preferably also exhibits good thermal properties (e.g., good insulator, low thermal capacitance). About 1100 A° of vapor-deposited $SiO_2$ (silicon dioxide) has been found satisfactory for the subject purposes (e.g., write/read at $\lambda$ =6330 A°). The Tellurium absorber layer 5 will be understood as highly absorptive of the contemplated recording laser spectrum (e.g., typically 25% absorptive; 30% reflective, with about 45% of the beam energy transmitted (for tri-layer cancellation, must transmit more than reflect).

The thickness of absorptive layer 5 depends on that of spacer 4 and should be minimal, only that sufficient to render the "Dark Mirror effect" known to workers -- being deposited on its anti-reflectance substrate, only until reflectance is first minimized.

Workers would view the Te absorber 5, with its low melting point and a relatively short thermal diffusion length (poor conductivity -- thus helping concerve incident laser energy) as a good, high-sensitivity material. When a write beam from laser source L falls upon site "v" of layer 5, a small portion of its energy will be reflected, a small portion absorbed and a large portion transmitted -- the transmitted portion being reflected back by layer 3 to be (principally) absorbed in layer 5. Hence both incident and reflected energy will heat film 5, minimizing transmission losses (deposition of 5 to yield "tri-layer").

--Results:

For instant purposes, "Sensitivity" will be understood as: characterizing the write-energy $E_w$ necessary to change reflectivity (or a like read-out characteristic) sufficient to give the desired minimum read-out.

The intensity and time exposure of the focused Write-Beam will be understood as sufficient to so elevate the temperature of absorber layer 5 as to cause the indicated change in reflectivity (at v sites) giving the desired read-out quality, etc. (e.g., so that adequate contrast, S/N ratio) may be realized, as unnderstood by workers in the art. --cf. an exemplary S/N ratio of 40-50 dB (peak-to-peak signal vs. RMS noise) for a bandwidth of about 15 MHz.

Here, test recording is performed with a gas (1-10 mW He-Ne) laser beam operating at 6330 A°, with recording exposure from 30-470 n. sec., (usually 10 mW, 40 n. sec. or about 400 pJ -- this intended to yield minimum adequate read-out, or about 40 + dB S/N, when read at lower power; e.g., viz: 150-500 $pJ/cm^2$, $pJ=10^{-12}$ watt-sec. or Joules). with the same or similar laser equipment. Note: for this contemplated setup, assume laser focused bit site $\sim$ ½-1 micron diameter, need for write-pulse about 40 n. sec. long [60 n. sec. from rise to fall -- this also accommodating disk rpm $\sim$ 1800 and galvo-mirror focus characteristics].

The subject record 1 is so-recorded upon. It is found (relating to comparable situations in the literature, etc.) that relatively low-power laser pulses can melt the Te film sufficient to yield the well-known "craters" or "holes" and give good read-out (e.g., bit reflectance of $\sim$ 50% vs. background of 1-3% at $\lambda$ =6330 A°) -- however with quite a bit of "noise" too.

Such "bit holes" will be seen to be actual voids (e.g., see photos in Ash article where 2-10 mW, 100 n. sec. laser pulse recorded such "holes" in like Te films -- there, it was assumed that a 250 A° film of Te used in the reflective mode produced 57% reflectance, 6% transmittance, 37% absorptance at 4500 A°). However, despite the fact that such Te films are deposited as a continuous layer, the formation of the "bit holes" (v) is described in the literature as accompanied by a surrounding rim -- and it is thought that this rim is responsible for (much of the mentioned "noise".

Evidently one needs a certain MIN. Write-Energy $E_w$ within a certain minimum rise-time (e.g., with this laser, etc. about 10 mW within 40 n. sec. to render adequate "holes" (e.g., higher power delivered too slowly can allow heat-at absorber to leak away; thus no "bit" is written).

Such "holes" or "pits" are indicated by the hole at "v" in FIG. 1. At least some of the absorber material 5 is then evidently softened and displaced at that bit-site, sufficient to reduce its thickness there and so give increased reflectivity (at least that is what the art conventionally teaches, e.g., see Ash article and cited U.S. 4,222,071).

Such a spot may be read-out with means known in the art, e.g., with a similar laser at low power (e.g., above described laser at 3 mW), the increase in reflected energy received (at a suitable photo-detector) is observed to yield on output signal representing the recorded bits, these being readily distinguishable from background -- this read-energy being insufficient to "erase" or disturb the so-recorded bits, of course. [Note: read-out at a frequency $f_R$, where "pit-depth" introduces a phase change vs. light reflected at surface of Te such as to maximize contrast therewith].

--Archival stability:

We found that the archival stability of this "Te record: was extremely poor, as the literature has noted (e.g., see Ash article re oxidation, etc.). For instance, under known temperature-humidity cycling, record 1 will be found (using no overcoat on layer 5) to lose 50% of its reflectivity in about 50 weeks, evidently mostly via oxidation, etc. The Te film of Example I will be found characterized by a rapid increase in overall optical transmission after such "aging". This is presumably caused by a g eneral oxidation of the metal as well as severe selected site-attack beginning at "defect sites": in the metal film. (cf. analogous test per MIL SPEC #810-B).

This is grossly inadequate for the mentioned "archival memory" requirements (at least 10-15 years exposure to normal computer operating/storage conditions; see Table I).

EMBODIMENT EXAMPLES

The following Examples are given by way of teaching some exemplary uses and advantages of "low temperature" absorbers according to the invention. Advantages and features thereof will be better appreciated by comparing them with the "Te Example" described above.

--Example I; Au absorber; (FIG. 2):

The operations, materials, methods and structure of the "Te Example" (FIG. 1) described above are essentially duplicated here, in a "gold record" 10, except as otherwise specified.

Record 10 will be understood as comprising a substrate-support 12 on which an "anti-reflective" substrate 1-AR is laid (preferably comprising a reflector layer 13, with a transmissive spacer layer 14 laid upon 13) with an absorber film 15 placed atop substrate 1-AR (spacer 14 thereof). Here, absorber 15 comprises a film of gold deposited like the Te film in the "Te Example", to a similar depth by essentially similar means. The underlying spacer layer 14, reflector layer 14 and substrate 12 are (at least functionally) otherwise the same as in "Te Example" and will be understood as also functioning as a "tri-layer".

That is, this gold absorber film 15 is preferably formed (as in "Te Example") by vapor depositing gold on the surface of $SiO_2$ spacer 4 until the well known "tri-layer" is rendered (i.e., until surface-reflectivity of 5 first goes to zero or "near zero").

--Results:

The results are most surprising, especially in light of expected properties and as compared with conventional media like the Te absorber described in "Te Example". That is, record 10 was recorded-upon, read-out and evaluated, with its sensitivity, etc., measured, as in the "Te Example" -- i.e., using an He-Ne laser system of the type mentioned. The so-written bit-sites exhibited a like increase in reflectance and higher output signal as with Te. As detailed below, one finds this yields a record with fine archival stability, unexpectedly-high sensitivity, high S/N and surprisingly low write-energy, and low write-temperature -- plus overcoat tolerance; yet one observes only "reflectance transitions" with no "pits" or like deformation of the absorber.

--"Archival stability" (resistance to environmental degradation): was found to be far superior to that of the Tellurium record in the "Te Example" (and to that of any known tellurium "pit" records); for instance measurements of change in optical reflectivity after "aging" (under a cycled elevated temperature/high humidity environment) indicate that this alloy is considerably more stable then closely-similar Tellurium films. And workers are well aware that gold is equal to such "archival" conditions as required here. It is projected that such "gold records" can maintain adequate read-out (30 + dB) for the order of ten (10) years or more of the contemplated storage and use.

--Unexpected "high sensitivity":

We found to our great surprise that such a thin gold alloy absorber can be approximately as "sensitive" as a Tellurium absorber (e.g., about ½ that of "Te Example" is common) -- e.g., that information can be recorded in the 5-15 mW, 10-100 n. sec. power range (or 100-1000 p.J.) -- specifically about 5 mW for as little as 40 n. sec. is seen to "switch reflectivity"; some samples even "switch" in about 10-15 n. sec. at 1-2 mW; others in less time at 10 mW -- all yielding satisfactory read-out (e.g., 30-40 dB S/N, etc.). This is really astonishing -- it is many times the value our theory predicted and is really contra to what the literature conventionally teaches!

That is, compared with known accepted "good absorbers" like Te, gold has such a relatively high melting point (about 1100-1200°C vs. about 450°C for Te) and such superior heat conductivity (that of Te is notoriously poor), that one would have to expect a gold absorber to exhibit sensitivity far inferior to that of Tellurium. For instance, the literature extols Te as having sensitivity which is vastly superior to Titanium, and Titanium has a high melting point like gold but is as poor a heat conductor as Te -- thus how can gold be a better absorber than Titanium?? One reason (see below) may involve the very different mechanism for such "bit formation", i.e., whereby, unlike Te, etc., no deformation (e.g., pit, bubble, etc. formation) is involved here; but rather something else serving to change reflectivity when subjected to such a write-beam, and evidently requiring considerably less write-energy.

--Low temperature recording:

A major surprise is that the indicated "reflectance transition" occurs at such low (write-)power levels and evidently at such low temperatures [see below, Examples show that this occurs well-below golds melting point]. Thus surprisingly high sensitivity, in turn, allows one to turn to "high-melt" material like gold which has superior archival properties, alleviating risk of corrosion, degradation over extended life.

--Writing "transitions" without "deformation" of absorbers:

An even greater surprise ensued when the so-written record (with low power, low T°) was examined for the usual "pits" ("holes" or like deformation as with Te films). After careful investigation (e.g., with scanning electron microscope), no evidence of "pits" could be found! -- and results were found that were unexplainable by pit formation! This was bizarre and most unexpected; all known absorber films of this type, when so written-upon (i.e., suitable laser energy, sufficient to yield significant read-out reflectance differences, as here), have definitely exhibited "pits" (i.e., displacement of absorber material at bit-site) -- as workers well know. Example I is a case in point.

This is so unorthodox that many of our co-workers refused to believe it for sometime. But to date, having found no convincing evidence of "pits" (a negative fact to be sure -- subject to possible explanation later), we must believe that there were none. It is possible, of course, -- indeed likely -- that greatly increased write power will generate such a hole or pit. And, one cannot be sure that present "deforming materials" like Te will not reset similarly under the "right" conditions.

Our best theory (as yet not fully worked out) is that, without forming any such "pits", this thin (pure gold) absorber film is so deposited (e.g., on tri-layer) as to be capable of being radically changed somehow by the usual write-beam so as to exhibit a significant difference in reflectance (vs. background), -- almost exactly as other known absorbers like Te have done in the course of forming "pits". We characterize this as "reflectance transition" for lack of a better term.

We are not yet sure of the causal mechanism -- e.g., whether it results from some solely-internal change in phase, or in crystallinity, in density, etc. (perhaps akin to the photo-polymers in Bartolini article cited above), or whether one or several interior micro-sites are so formed.

This strange absence of "deformations" and apparent lack of melting, coupled with the unexpectedly low write-energy ($E_w$), leads us to infer that the so-written "reflectance transitions" occur because of internal, relatively microscopic changes in the gold film -- as opposed to the conventional "macroscopic" changes like pit forming (and one can infer that the latter reasonably should require more write-energy). We theorize that such transitions are peculiar to "ultra-thin" films of this type (on the order of 100 to several hundred A° $\pm$ 50%). One could further surmise that such films exhibit special properties unrelated to those of the "bulk metal" -- properties attributable (in part at least) perhaps to the relative prominence of metal substrate bonds (e.g., $Au-SiO_2$ bonds vs. $Au-Au$ bonds). And we expect that for thicker films (more like "bulk metal") more write-energy would be required -- if indeed such "transitions" are possible (e.g., $Au-Au$ bonds predominate and are stronger).

Now this new type of "phase transition", or rearrangement of absorber structure under mild heating, may result (at least in some cases) when the absorber is deposited as an ultra-thin "semi-continuous" film which the heat of the write-beam can coagulate into colloid (more discontinuous) form. Such a result might be analogized to the "ruby glass" phenomena known in the glass industry [see "Coloured Glasses" by W.A. Weyl published 1951 (Reprinted) by Dawsons of Pall Mall,London 1959]. This could, in effect, "optically eliminate" absorber 15 of the tri-layer, eliminating the associated "phase-cancellation" and letting reflectance from reflector 13 only, take-over [e.g., "colloid-islands" with diameter of a few A° vs. beam 1000 X wider].

In any event, workers will certainly welcome the availability of such novel gold absorbers, not only because of their evident ease of manufacture (deposition, handling) by well-known methods and properties, and their evident superior archival stability and aptness for use in computer disk records (e.g., per Table I), but also because writing such "transitions" implies special unique advantages -- e.g., dispensing with need to melt absorber, or to "roll aside" absorber mass to form a "pit", absence of typical "pit-rim" giving rise to "read-out noise", and associated unconcern with constrictive effects of over-coatings (e.g., a protective film covering the ordinary pit-forming Te absorber will be expected to "squeeze" the pit site sufficient to retard pit-formation); also, the associated reduction in write-energy and record temperature -- all these promising the ability to "laser-write" with much less energy and to write smaller bits! Workers will welcome a system whereby bits may be recorded without the intense heat and macroscopic changes inherent in the well-known pit formation.

--Overcoating; effects:

The "Te Example" was also run with a thin overcoating of SiO (100 A°, vapor deposited) on the Te film. This was not really a true, functional overcoat of the kind workers have suggested (e.g., several mils thick, to permit record handling, without scratching to "defocus" surface dust, grime, etc.; to impede vapor entry, e.g., water, oxygen; to further conserve writing heat, etc.); but did effect "pit formation", raising required write energy to about double! (Possibly because it so "squeexed" Te film at pit-site as to impede associated displacement of Te material there). And workers are aware that such "deformation media" (as with pits in Te, bubbles in other metals, etc.) cannot tolerate such an "overcoat" (e.g., read-out signal destroyed; sensitivity raised).

Significantly, when an Au film as in Example I was similarly over-coated, no such effect was seen (e.g., same write-energy to generate "pseudo-pits"). As workers will see this reinforces the theory that the instant "transition" mechanism is quite novel( no movement of Au metal to form "pit", etc.) and amplifies the attractiveness of such absorbers (tolerance to overcoating is very, very important). Evidently the involved "reflectance transition" is more tolerant of the usual overcoat. For instance, coating such a pure gold tri-layer with several mils of transparent Teflon doesn't radically disturb its record properties (e.g., sensitivity, read-out drop only a bit -- vs. with Te, cannot record at all, at this power level). This compatibility of gold absorbers with such elastomeric insulative overcoatings is a very welcome feature. To our knowledge, this is the first such absorber that accepts such overcoatings while maintaining good record properties (sensitivity, S/N, archival, etc.).

As another feature hereof, and based on the foregoing and other Examples, one would infer that such an ultra-thin absorber film (of gold) is probably not behaving as predicted from reported "Bulk" (Gold) properties (e.g., thermal conductivity -- e. g., radical conductivity cannot be significant). The discovery of such "thin film properties" is significant and is further mentioned below.

By way of showing that these "transition bits" (reflectivity-switching) occur well-below the melting temperature (of gold) and involve no "pits" or other deformation, Examples II-V follow.

--Example II; Gross heating:

The record of Example I is essentially replicated with pure gold deposited on the same tri-layer to same depth as Example I. However, rather than subjecting it to a laser write beam, the record is simply heated, rather crudely, at several spots with a common soldering iron. The spots are heated to a "transition temperature" (-range, considerably below the melting point or the softening point) where a radical change in color is observed (extreme change in gross "eyeball-reflectance" occurs rather suddenly).

That is, we slightly heated spots on this "pure gold" absorber sample, with the solder iron heated to about 550°C (estimate is maximum T° of iron, and is well below gold's melt. point of 1100-1200°C) -- and we found to our surprise that the "eyeball appearance" of each so-heated spot changed very radically (from a relatively low-reflectivity dark blue, to a high reflectivity "white" - pale violet). Again, examination failed to find any evidence of "pits".

--Example III; as II, but Au/Pb:

Example II is repeated, however with a gold-lead alloy replacing the pure Au. The results are essentially the same except that they occurred a bit faster (at lower T° as sample warmed-up). This strongly suggests that various gold alloys can be made to yield these inventive results (high-sensitivity; "write" with very low power and well below melt point, etc.).

Another like sample (Au/Pb) is made and is written, then read-out as in Example I. Results were much the same as Ex. I (pure Au) except that sensitivity was a bit higher (higher than in "Te Ex." too!).

--Example III-A: I; but Au/Sn:

Ex. I is replicated, however substituting an Au/Sn alloy for the pure gold absorber film. Results were quite similar to Ex. II, with a minor drop in sensitivity.

The "alloys" in Ex. III and Ex. III-A are, really separate Au, Pb or Sn layers vapor-deposited (as in Ex. I) individually and sequentially [e.g., Au, then Pb, then Au, then Pb, then Au to a total depth giving "initial zero reflectance" as in Ex. I]. Thus, they are better characterized as "laminate-mixtures".

--Example IV; Au, on glass only; torch-heating:

Example I is repeated except that, instead of a "tri-layer" substrate, only a glass sheet is used. The same deposition is carried out, with the Au film vapor-deposited to the same "tri-layer depth" (e.g., in common chamber with a second tri-layer sample, keeping deposition time the same for both samples, while monitoring tri-layer reflectance as in Ex. I).

Results were closely similar (color change at estimated 450°C, with radical change in reflectivity occurring; however heating was with a "blow torch".

The temperatures in Examples II, III and IV were estimated, not precisely tracked.  This was remedied in the Example V below.

--Example V: as I, oven heating, T° monitored:

Example I is replicated (pure Au on tri-layer). However, the sample is heated in an oven (not laser written) and its temperature carefully monitored (with thermocouple) along with its reflectance (5 mW He-Ne laser at 6330 A° and associated detector and read-out means).

FIG. 3 is a resultant plot of oven/record temperature vs. reflectivity (reflectance scale arbitrarily chosen -- #0.5 corresponds to ~ 5% refl.; #20 to ~ 90% reflectance).  This plot confirms that such "mild heating", kept well below gold melt T°, will, of itself, induce a radical change in reflectance; cf gradual change from about 200-400°C; then sharply from 400-550°C; (here, entire sample surface is heated -- no melting observed).

Workers will agree that the gross macroscopic color transitions observed in Ex.s II-V above, under such "mild" (non-melting) heating certainly confirms that such "reflectance transitions" in a gold film have nothing to do with forming "pits" or any other deformation.

This is exciting on several counts -- e.g., promising "low-T° writing" (low $E_w$), elimination of read-out noise associated with  the ridges that usually form around such "pits", higher bit density, ability to "so-write" on noble and like "archival metals with a relatively high melting point.

--<u>Example VI - as I, but elastomer substrate</u>:

Example I is replicated except that a glass slide is substituted for disk 12 and a transparent Teflon coating is substituted for $SiO_2$ spacer 14. The same kind of vapor deposition is undertaken, e.g., Al film 13 on glass slide until monitored reflectance is maximized, then Teflon to "spacer-thickness" as before, then pure Au deposited until "first minimum reflectance"(of companion tri-layer sample).

--<u>Results:</u> Results are similar to those of Ex. I only better, for instance, exhibiting about 4 X sensitivity. And adequate "transitions" (for read-out) can be written with the same He-Ne laser at power as low as about 1-1.5 mW (40 n. sec. -- "threshold level"). As before, no evidence of "pits" etc., is seen (e.g., with scanning electron microscope). Also, adhesion of the gold was also superior (vs. $SiO_2$).

Evidently the elastomeric spacer, (Teflon) greatly improves writing efficiency, keeping write-beam heat localized at the "bit site".

--<u>Example VII: -- as VI, elastomeric overcoat</u>:

Ex. VI is replicated except that an overcoat of 2000 A° transparent Teflon is applied on the gold absorber film.

--<u>Results:</u> Results are almost as good as in Ex. VI; with some drop in sensitivity. It is even possible to write "transitions" at laser power as low as 0.1 mW if a 30 sec. exposure (approximately) can be tolerated.

This result would be very unexpected if the bits were written according to prior art mechanisms (e.g., forming "pits"). That is, conventionally, one expects such an overcoat to radically degrade sensitivity (require more write-energy). For instance, as mentioned above, an overcoat on a Te film as in "Te Ex." prevents writing entirely (with reasonable power levels, like the described 10 mW). Workers have surmised that the apparent spot increase in needed write-energy (for "pit forming") stems from the overcoat "squeezing down" on the absorber, resisting translation of its mass as a "pit" begins to form.

Thus, the instant results are not only surprising and advantageous but tend to confirm that the involved novel "transition" mechanism (and related "transitional absorber" material like Au) is quite unrelated to forming pits or other deformation. And workers will welcome such novel ODD records and associated systems where overcoating appears so feasible.

The foregoing will confirm that "mild heating" (to well below melt T°) of such a bit site in such gold films produces definite reflectance changes ("transitions") without any pit formation.

This susceptibility of such thin absorber films of gold for recording bits (adequate change in reflectance, etc.) by such "mild heating" well below the melt point, holds great promise for improved recording systems. As workers will attest, any improvement that can significantly reduce write-energy requirements should, of itself, offer tremendous potential. For instance, the present state of the art is such that a mere 25%-50% reduction in required write-laser power could render systems cheap, reliable and practical, that are presently questionable -- thus our invention could make a commercial system out of what is now a mere laboratory curiosity.

Workers will appreciate that one will also expect to be able to so use gold, and its compatible alloys, in other related circumstances (e.g., gold deposit on another kind of substrate where such "mild heating" at "bit sites" yields useful variance in reflectivity). In such cases, one will expect to formulate the gold (or an alloy thereof) to meet the operational requirements (e.g., as in Table I, sufficient gold, etc. in alloy to yield adequate archivalability, sensitivity, etc.). Then, by whatever means one will expect to (experimentally or in theory) determine the write energy $E_w$ needed to achieve such "reflectance-switching" and relate this to the recording context (--i.e., to laser power and exposure time at $\lambda_o$, to thermal environment of absorber film, accounting for full-system in respect of optics, reflectance, heat losses to adjacent layers, etc.) -- and "test-heating" of the contemplated record as in the above Examples can be undertaken to derive or confirm this.

And workers will also appreciate that other materials should be contemplated for like application. Thus, similarly one will expect to be able to select another such "transitional absorber" (e.g., like Ag, Cu, or their alloys), properly formulate it, determine the related write-energy $E_e$ to yield to expected "reflectance-switching" and relate this to the involved recording context -- perhaps test heating a given absorber film thereof on its intended substrate in a temperature monitored oven, to determine, or confirm, what is the necessary film thickness, substrate character, laser energy, etc. And test-writing and read-out of the associated record will, of course, give further indication of operating characteristics and conditions.

--Example VII: preferred R/W ODD disk; FIG. 4

Fig. 4 depicts, in fragmentary idealized section, an improved ODD disk record R apt for use in "low power" R/W laser systems, e.g., of the type shown in FIGS. 5-7 and described below. Record R comprises a substrate disk 112 on which is disposed a gold tri-layer 101 including a gold absorber film 115 atop an anti-reflective optical substrate comprised of dielectric spacer 114 on reflective layer 113. Those elements and the associated materials, operations, etc. may be understood as essentially the same as in Ex. I except as otherwise stated. Record R is capped with an overcoat 100-oc upon absorber 115. Further details are as follows.

Substrate disk 112 is preferably a well-known Winchester disk of the type presently used for magnetic recording records in computer systems (aluminum, 14" dia., usual polished surface). Preferably it is coated, at 112-S with a "subbing layer" adapted, as known in the art, to provide a smooth surface for deposition of reflector layer 113.

Alternatively, the disk itself may be made as a tuned (to $\lambda_o$) dielectric mirror.

As mentioned, reflector 113 (AL film as before) and spacer 114 preferably provide an anti-reflective base on which absorber film 115 is applied to complete the well-known "tri-layer". Spacer 114 is preferably comprised of transparent Teflon or like organic of "tri-layer thickness". Alternatively, $SiO_2$ or like "glass" may replace some of the organic, (e.g., center-portion) leaving organic (Teflon) above for good adhesion to gold, and as "thermal barrier" preventing reflector 113 from draining any appreciable energy from absorber 115 [stable under such heating].

Absorber layer 115 comprises pure gold vapor-deposited on the anti-reflective substrate 114, 113, etc. as before (to yield "first min. reflectance depth", etc.).

Overcoat 100-oc is next applied on absorber 115 to function, as known in the art, as a scratch-resistant "cap", a barrier to intrusion of contaminants (e.g., water, oxygen vapors) and to "defocus" dirt and grime thereon. That is, one may optically-eliminate (or at least reduce) the effects of surface dust, etc. (on 100-oc) by simply making it thick enough, albeit transparent to $\lambda_o$, to throw it out of focus when illuminating absorber 115 (e.g., here a few mils thick). Now, any dust particles settling on the overcoat surface are displaced far enough from the focal plane of the optical system as to have no appreciable effect on read/write operations.

Overcoat 100-oc may comprise a suitably-transparent glass. However, in certain cases, a barrier coating (e.g., 100 A° SiO and/or several hundred A° Teflon) is first coated upon absorber 115. In certain instance, where flexibility is critical, the glass may be replaced by a flexible organic (e.g., "RTV silastic" of General Electric Co.) and in such a case a "wear-cap" will often be advisable (e.g., acrylic layer on RTV or as in U.S. 4,101,907).

Now, workers will recognize that one will use such a record by rotating it (e.g, 1800 rpm preferably here) while using the Write Beam to write a selectable number of information tracks, each track comprising a succession of spaced "bit-sites" ("Transitions" written there, as reflectivity changes), separated by unwritten areas in which the reflectivity of the absorptive layer 115 is undisturbed.

For read-out, a laser beam of relatively constant intensity and prescribed wavelength is likewise focused on the information track comprising these bits at the absorber layer as the disk is rotated. Thus a bit can represent a "one" where the write-beam has switched reflectivity along this track; otherwise a "zero" may be understood. The read laser will apply energy insufficient to so change spot reflectivity, and at a frequency at which the undisturbed regions of the track exhibit an "anti-reflective" condition, preferably. A photo detector is positioned to receive light reflected from the passing "bit sites" being used, as known to develop as output signal representing the so-recorded "bits". The reflectance changes need not be maximal, just sufficient to give the needed minimal read-out contrast (e.g., S/N ratio that can be tolerated in the contemplated playback mode).

Workers will appreciate how this teaches that one may use a thin film of gold as the absorber (information) means in a "low-radiation" record adapted for high-density digital data recording for data processing using low-power recording means, like a 10 mW laser, to "write" bits ("transitions") detected via reflectivity change. Evidently, other related absorber structures, related materials and related read/write systems will be applicable in certain instances. Below is an example of a preferred R/W system apt for using such a record.

--Associated low-power R/W system, FIGS. 5,6,7:

An example and preferred mode of using such a recording medium will now be briefly described with reference to a preferred related optical recording/ reproducing system 200 in FIG. 5.

FIG. 5 generally illustrates a system 200 wherein data to be recorded is first applied to recording circuitry 210 which encodes the applied data using, for example, a conventional encoding format of the type employed for magnetic recording, such as non-return-to-zero, return-to-zero, etc. Conventional error checking may also be provided for the encoded signal.

The encoded data 210a from the recording circuitry 210 is applied to a laser optical system 212. The laser optical system 212 generates three laser beams 212a, 212b, and 212c which are focused at spaced locations along the center line of the same selected track of a preformatted optical disk 215 supported on a precision spindle 216 for rotation by a motor 218. Optical disk 215 may, for example, be a tri-layer disk of the type disclosed in the aforementioned Example VII.

Laser beam 212a is a writing beam which is modulated by the encoded data so as to form optically detectable changes in a selected track of the optical disk 215 representative of the encoded data. It is to be understood that the optically detectable changes (e.g., "bits") produced in the disk by the write laser beam 212a need involve no physical deformation such as pits or holes. The only requirement is that optically detectable changes be produced in selected areas of the disk in response to the write laser beam 212a which are representative of the encoded data 210a. For the purpose of this description, all of the possible types of optically detectable changes that can be produced will hereinafter be referred to as "transitions".

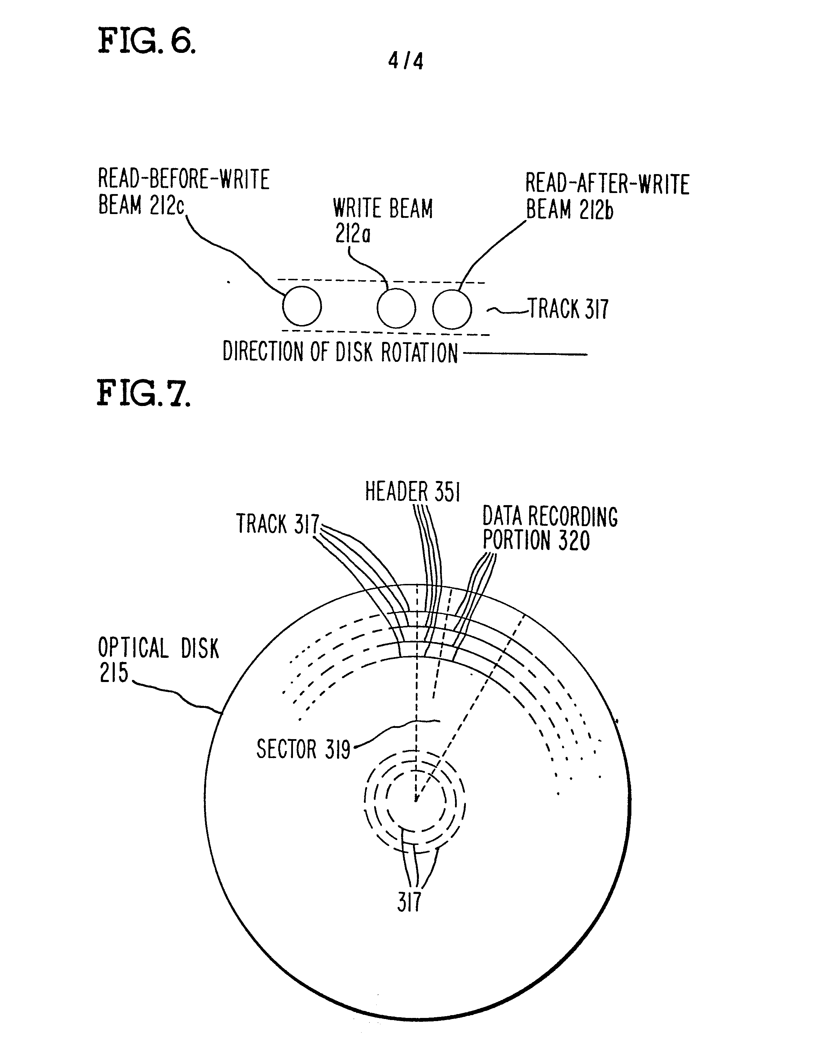

Laser beams 212b and 212c shown in FIG. 5 are reading beams. As typically illustrated in FIG. 6, the reading beam 212b is a read-after-write beam which is accordingly focused behind the writing beam 212a on the center line 217a of a selected track 217; while beam 212b is a read-before-write beam and is accordingly focused ahead of the writing beam 212a. The intensity of the read beams 212b and 212c are chosen so that they will not disturb the integrity of previously recorded information. The read beams are reflected from the disk 215 back to the optical system 212 which, in response thereto, derives a plurality of detection signals 214a, 214b and 214c which are applied to signal processing electronics 220. The signal processing electronics 220 also receives the encoded data signal 210a from the recording circuitry 210 for use in checking the accuracy of recorded data, . .

The signal processing electronics 220 uses the detected signals 214a, 214b and 214c to provide an output data signal 220a corresponding to data read from the optical disk 215, along with signals 220b and 220c respectively identifying the track and sector locations on the disk from which the data is read. The signal processing electronics 220 also produces control signals 210b, 221a 221b, 221d, 221e and 221f. More specifically, control signal 210b is applied to the recording circuitry 210 for synchronizing the encoding of data with disk rotation; control signal 221a is.applied to the optical disk motor 218 to provide accurate speed control during recording and reading; control signal 221b is applied to the laser optical system 212 for controlling the radial position of the laser beams 212a, 212b and 212c for the purpose of selecting a desired track;

control signal 221c is applied to the laser optical system 212 for providing precise track following of the laser beams on the selected track; control signal 212d is applied to the laser optical system 212 for providing precise focusing of the laser beams 212a, 212b and 212c; and control signal 221e is applied to the recording circuitry 210 for interrupting recording if the reflected read-before-write beam indicates the possibility of an overwrite recording error because the track ahead contains previously recorded data; and signal 221g is applied to the recording circuitry 210 to interrupt recording if a recording error occurs.

Next to be considered is the manner in which preformatting is provided for the optical disk 215 in FIG. 5 in accordance with the invention. An example of a typical formatting arrangement is illustrated in FIG. 7.

As generally indicated in FIG. 7, the optical disk 215 in the preferred embodiment being described contains a large plurality of circumferential tracks 317. The disk 215 is also divided into a plurality of sectors 319. As indicated in FIG. 7, each track 317 within a sector 319 comprises a header 351 and a data recording portion 320. The data recording portion 320 is the portion into which data is written during recording and comprises the greater portion of the track length within each sector 319. The header 351 of a track 317 is encountered first in each sector 319 and is provided on the disk prior to recording. The provision of such headers 351 on a disk prior to data recording is typically referred to as "formatting" the disk, and the resulting disk is considered to be "preformatted".

Other details of system 200 will be understood by workers in the art representing "present good practice" (e.g., with regard to particulars of subsystems, devices, components, materials and related manufacture and operation). Examples of various known methods and approaches may be seen in the following references:

| Patent No. | Inventor(s) |
|---|---|
| 4,216,501 | Bell |
| 4,232,337 | Winslow, et al |
| 4,243,848 | Utsumi |
| 4,243,850 | Edwards |
| 4,253,019 | Opheij |
| 4,253,734 | Komurasaki |
| 4,268,745 | Okano |

and in:

R.A. Bartolini, et al., "Optical Disk Systems Emerge", IEEE Spectrum, August 1978, pp 20-28

G.C. Kenney, et al., "An Optical Disk Replaces 25 Mag Tapes", IEEE Spectrum, February 1979, pp. 33-38.

K. Bulthuis, et al., "Ten Billion Bits on a Disk", IEEE Spectrum, August 1979, pp. 26-33.

A.E. Bell, et al., "Antireflection Structures for Optical Recording", IEEE Journal of Quantum Electronics, Vol. QE-14 No. 7, July 1978, pp. 487-495.

The subject matter of these references is to be considered as incorporated herein, as is that of all other references

--Conclusion:

Workers will appreciate how aptly such "transition-forming" records and related R/W systems are to provide novel, improved records for computer applications and the like. In particular it will be appreciated that such records can be used to improve the efficiency, power usage and the cost effectiveness of an ODD disk drive as mentioned -- something workers in the art will applaud. Workers will also appreciate that such records and R/W systems for other like applications in related environments.

For instance with such records modified to operate in other (R/W) frequencies and/or for other related purposes (e.g., holographic recording).

It will be understood that the preferred embodiments described herein are only exemplary, and that the invention is capable of many modifications and variations in construction arrangement and use without departing from the spirit of the invention.

Further modifications of the invention are also possible. For example, the means and methods disclosed herein are also applicable to positioning other transducers and related loads in similar systems and environments. For instance, related embodiments may be employed to position transducers for other forms of recording/reproducing systems, such as those in which data is recorded and reproduced optically. And, while the principles of the present invention have been demonstrated with particular regard to the embodiments described, it will be recognized that various modifications are possible. For instance, the "records" disclosed in these embodiments can also be applied to other recording contexts; e.g., in different disk (read/write) environments where data is recorded and reproduced using other radiation beams.

Since the mentioned examples of possible variations are merely illustrative, the present invention will be understood as including all possible modifications and variations coming within the scope of the invention as defined by the appended claims.

What is claimed is:

1.　　A method for providing a record blank for use over relatively long archival life with a recording radiation source providing a write beam at a given frequency and relatively low write-energy, the method comprising:

providing a substrate having a recording portion exhibiting prescribed optical and thermal characteristics at the given frequency;

applying a prescribed information layer on said portion of said substrate, the material for this layer being selected to a "transition material" and to exhibit a prescribed absorptivity and "virgin-reflectivity" at the given frequency, and also to be adapted to be shifted to a read-out reflectivity on reception of said write-beam corresponding to information to be recorded on prescribed "bit-sites" thereof;

this "transition material" further being selected and applied so that said beam may so alter said material reflectivity in the course of recording, with the material at each so-recorded bit-site so changing significantly in reflectivity yet without melting or deformation thereof; while also providing good read-out contrast by comparison with the non-recorded areas exhibiting said virginal-reflectivity.

2.　　The method of claim 1, wherein said information layer material is vapor-deposited to a depth just sufficient to render a "first minimum reflectance" as the virginal-reflectivity.

3.        The combination as recited in claim 2, wherein the substrate is formed to be an anti-reflective portion by providing a metal support disk, applying a subbing layer thereto, depositing a reflector film on the subbing layer and depositing a spacer thickness on the reflector film, selecting this spacer thickness to be transparent and thermally-insulative fluoro-polymer functioning to support the information layer, this layer being arranged to have a thickness such as to be partly transmissive to the write beam at said frequency and which thickness is so related to the thickness of the spacer means and to the optical properties of the spacer and reflector means as to, with the information layer, establish a "substantially anti-reflective" condition as said virgin-reflectivity for the record blank at the given frequency.

4.        The method of claim 3, wherein said information layer, said spacer means and said reflector means are selected and deposited to be combined into a "tri-layer" structure.

5.        The combination as recited in claim 4, wherein the spacer thickness comprises tetra-fluoro ethylene.

6.        The method of claim 5, wherein the information layer is comprised of gold; said gold being vapor-deposited to a depth corresponding with "first minimum reflectance".

7.        The method of claim 6, wherein said substrate comprises an aluminum disc with smoothing layer on which an aluminum reflector film is deposited.

8.     A method of making an improved "non-deformational radiation record" adapted for use over relatively long archival life, with a recording radiation source providing a write beam at a given frequency and relatively low write-energy to write "shifted-reflectivity" bits on the record, this method including the steps of:

providing an "anti-reflective" substrate structure by depositing an organic insulative transparent spacer thickness on a reflector portion of a disk substrate such as to render the record "anti-reflective" for deposition of an informational layer thereon while also thermally isolating this layer from the substrate where the "bits" are so written; and

depositing the "information layer" adapted for such recording on said structure to a uniform depth corresponding to "initial minimum reflectance" thereof, as a virginal record reflectivity.

9.     The method of claim 8, wherein said information layer is covered with a defocusing thermally-insulative overcoat.

10.     In a method for providing a record blank, for use with a focused beam of playback radiation of a given frequency and a first playback intensity and also for recording with a focused beam of recording radiation of said given frequency and a second recording intensity adapted to write information "bits", said second intensity being greater than said first intensity yet being insufficient to melt the associated informational layer, this method comprising the steps of:

providing disc support means including a reflective surface portion;

applying to this portion a first thickness of spacer material exhibiting good thermal insulation properties and being substantially transparent to radiation at said frequency;

applying on this spacer material a layer of informational material of a given transition-thickness, and exhibiting some absorptivity, some reflectivity and considerable, more transmissivity at said given frequency, the spacer thickness being such as to induce minimum reflectance from said information layer under said playback beam except at the "bit sites;

whereat said recording beam is adapted to so heat said information material there as to induce maximum reflectance there under said playback beam; yet without melting the material at the bit site; these reflectance values being arranged to so differ that the as-written record will exhibit a given minimum signal-to-noise ratio during playback with said playback beam at said first intensity;

said spacer material being selected to comprise a transparent fluoro-polymer.

11.     The method of claim 10, where the spacer thickness comprises tetra-fluoro-ethylene on which an information material of gold or an alloy thereof is vapor-deposited, and wherein the disc is formed of aluminum with a reflective surface subjacent said spacer thickness.

12.     A method of providing a record blank for use with a low-power recording laser beam for playback with a related playback laser beam, both beams operating at a given wavelength, this method comprising:

providing a substrate having a light reflective surface which exhibits high reflectivity at said wavelength;

applying a thickness of spacer-insulator material exhibiting high transparency to said wavelength on said substrate surface; and

depositing an information layer of "transition-material" exhibiting certain reflectivity absorption but greater transmissivity at this wavelength on this insulator material, this transition material being selected, deposited and arranged so the reflectivity thereof is significantly altered by said recording beam, yet without being melted or deformed thereby;

the insulator material comprising a clear organic dielectric.

13.     The method of claim 12, wherein the spacer-insulator is formed to a thickness such that the laser illumination at the surface of the information layer at said wavelength is normally substantially out-of-phase with, and thus cancelled-out by illumination reflected by said reflective surface, and is comprised of a fluoro-polymer.

14.     A method of affording a record blank for non-deformational, non-melting recording of "transition bits" on an information layer thereof with low-power laser write-beams of prescribed wavelength, the method comprising: providing a substrate including a prescribed reflector surface exhibiting high reflectivity at said wavelength; super-posing a spacer thickness on said surface; and super-posing a layer of "transition material" on the spacer layer to form said information layer; this transition material being formulated and applied to a depth whereby, in combination with said spacer layer and reflective surface, the information layer exhibits a first reflectivity at the "transition-bit" sites which have been subjected to the write-beam and exhibits a second, significantly contrasting reflectivity elsewhere; yet without melting under said write beam; the spacer thickness being selected to also thoroughly isolate the "bits" from the substrate and comprising a clear polymer.

15.     A method in accordance with claim 14, wherein said substrate is in the form of a disc with at least one metallic reflector film means thereon constituting said reflector surface; and wherein the spacer comprises a thickness of thermally-insulative transparent fluoro-polymer whose depth, in conjunction with the reflector film means, constitutes an "anti-reflective" substrate for said "transition material" as well as so isolating it.

FIG.1.

1/4

FIG.2.

FIG.4.

# FIG.3. Reflectivity of Gold Tri-layer as a Function of Temperature.

Reflectivity { Ara Units }

y-axis: 2.0, 1.5, 1.0, .5

x-axis: 100°, 200°, 300°, 400°, 500°, 600°, 700° Temp.{C°}

# FIG. 5.

SECTOR SIGNAL 220c

TRACK SIGNAL 220b

OUTPUT DATA SIGNAL 220a

SPEED CONTROL SIGNAL 221a

READING CLOCK INTERRUPT SIGNAL 221f

OVERWRITE INTERRUPT SIGNAL 221e

TIMING SIGNAL 10b

SIGNAL PROCESSING ELECTRONICS

TRACK SELECTION SIGNAL 221b

TRACK FINDING SIGNAL 221c

FOCUS SIGNAL 221d

220    214a    214b    214c

DATA

RECORDING CIRCUITRY

LASER OPTICAL SYSTEM

ENCODED DATA 210a

212a
212b
212c    LASER BEAMS

OPTICAL DISK 215

SPINDLE 216

218    DISK MOTOR

3/4

0079230

200

# FIG. 6.

READ-BEFORE-WRITE
BEAM 212c

WRITE BEAM
212a

READ-AFTER-WRITE
BEAM 212b

TRACK 317

DIRECTION OF DISK ROTATION

# FIG. 7.

HEADER 351

TRACK 317

DATA RECORDING
PORTION 320

OPTICAL DISK
215

SECTOR 319

317